# EUROPÄISCHE PATENTSCHRIFT

(11) **EP 0 880 659 B1**
(45) Veröffentlichungstag und Bekanntmachung des Hinweises auf die Patenterteilung: **24.03.1999**
(21) Anmeldenummer: 97920505.1
(22) Anmeldetag: 13.03.1997
(51) Int. Cl.: F24D 19/10, F24J 2/40

(54) **MODULIERENDER SOLARREGLER**
MODULATING SOLAR-POWER REGULATOR
REGULATEUR SOLAIRE A EFFET MODULATEUR

(30) Priorität: 13.03.1996 DE 19609825; 26.03.1996 DE 19611865; 15.04.1996 DE 19614833; 02.05.1996 DE 19617577; 15.06.1996 DE 19623978; 09.07.1996 DE 19627569; 01.08.1996 DE 19631057; 23.08.1996 DE 19634068; 03.09.1996 DE 19635626; 16.10.1996 DE 19642642; 04.11.1996 DE 19645117; 21.11.1996 DE 19648279; 25.12.1996 DE 19654217; 03.01.1997 DE 19700129; 28.01.1997 DE 19702883
(43) Veröffentlichungstag der Anmeldung: 02.12.1998
(73) Patentinhaber: Böhringer, Volker, 75417 Mühlacker (DE)
(72) Erfinder: Böhringer, Volker, 75417 Mühlacker (DE)
(86) Internationale Anmeldenummer: DE9700502
(87) Internationale Veröffentlichungsnummer: WO9734111

(56) Entgegenhaltungen:
- DE-A- 2 753 810
- DE-U- 9 207 743

## Beschreibung

Die Erfindung geht aus von einem Verfahren nach der Gattung des Hauptanspruchs. Üblicherweise wird der Wärmespeicher einer thermischen Solaranlage durch einen Zweipunktregler mit Hysterese beladen. Sobald die Temperatur des Solarkollektors um einen bestimmten Betrag über der des Wärmespeichers liegt, wird eine Pumpe eingeschaltet, die einen Wärmeträger vom Solarkollektor in den Wärmespeicher pumpt. Dort gibt der Wärmeträger einen Teil seiner Wärme ab und fließt in der Rücklaufleitung wieder dem Solarkollektor zu. Verringert sich die Temperaturdifferenz zwischen Kollektor und Wärmespeicher während des Pumpbetriebes unter einen fest vorgegebenen Wert wird die Pumpe ausgeschaltet. Nachteilig an dieser einfachen Regelung ist, daß die Wärmeverluste bei Beginn des Pumpens und der Wirkungsgrad des Solarkollektors nicht berücksichtigt werden. Weiterhin ist eine Regelungseinrichtung mit Leistungsanpassung für solarthermische Anlagen (DE-U-92 07 743). bekannt, bei der versucht wird, den Energieeintrag des Solarkollektors in den Wärmespeicher dadurch zu optimieren, daß der zeitliche Gradient der Kollektortemperatur und der zeitliche Gradient der Temperaturdifferenz des Wärmeträgers beim Eintritt in den Wärmespeicher und beim Austritt aus dem Wärmespeicher berücksichtigt wird. Diesen Verfahren ist gemeinsam, daß sie temperaturabhängig den Durchfluß des Wärmeträgers durch Kollektor und Wärmespeicher regeln.

Die Erfindung mit den kennzeichnenden Merkmalen der Ansprüche 1 und 2 hat demgegenüber die Vorteile, daß die Fördereinrichtung nur eingeschaltet wird, wenn sich dadurch die Innere Energie das Wärmespeichers erhöht. *Auf der Basis innerer Energien der Solaranlage bzw, ihrer Teile, sowie unter hinzunehmen eines anlagenspezifischen Betrages, welcher sich aus physikalischen Größen der Solaranlage, wie beispielsweise Volumina und Temperaturen ergibt und beispielsweise als additiver Term in der Kollektormindesttemperatur vorgegeben werden kann, wird eine Regelung der Solaranlage vorgenommen, die einen optimalen, den Bedingungen angepaßten Betrieb der Solaranlage ermöglicht.* Durch das Vermeiden unnötiger Einschaltvorgänge, wird außerdem der Energiebedarf der Fördereinrichtung minimert.

Nach einer weiteren diesbezüglichen vorteilhaften Ausgestaltung des Verfahrens, wird die Fördereinrichtung erst eingeschaltet, wenn die Einschaltbedingung nach Verfahrensschritt 1.3.1 bzw. 2.3.1 erfüllt ist und wenn die zweite Ableitung nach der Zeit der Differenz der Inneren Energie des im Energiesammler (1) und in der Verbindungsleitung ( 4 ) befindlichen Wärmeträgers einerseits und der inneren Energie, die dem Wärmespeicher (2) gemäß Verfahrensschritt 1.2 bzw. 2.2 entnommen wird andererseits, *kleiner Null* (< 0) ist so daß der Wärmeintrag maximal wird, bei gleichzeitig minimalem Energiebedarf zur Förderung des Wärmeträgers .

Die Erfindung mit den kennzeichnenden Merkmalen des Anspruchs 4 hat demgegenüber die Vorteile, daß die Wärmeversorgung des Wärmeverbrauchers durch den Energiesammler verbessert wird, der Wirkungsgrad des Energiesammlers erhöht wird und die Wärmeverluste in den Verbindungsleitungen verringert werden, weil die Fördereineinrichtung schon eingeschaltet werden kann, sobald die Temperatur des Wärmeträgers über der Temperatur des Wärmeverbrauchers liegt.

Nach einer weiteren vorteilhaften Ausgestaltung einer Vorrichtung zur Durchführung des Verfahrens nach einem der Ansprüche 1 bis 4, ist die Fördereinrichtung eine Pumpe, so daß der Wärmeträger unabhängig von den Strömungswiderständen von Solarkollektor, Verbindungsleitungen und Wärmetauscher zirkuliert.

Nach einer weiteren vorteilhaften Ausgestaltung einer Vorrichtung zur Durchführung des Verfahrens nach einem der Ansprüche 1 bis 4 werden die Fördereinrichtung und das Rückschlagventil durch ein geregeltes Durchströmventil ersetzt, so daß der Energiebedarf der Anlage durch Ausnutzen der natürlichen Konvektion des Wärmeträgers zur Förderung der im Energiesammler gesammelten Wärme in den Wärmespeicher minimiert wird.

Nach einer weiteren vorteilhaften Ausgestaltung einer Vorrichtung zur Durchführung des Verfahrens nach einem der Ansprüche 1 bis 4 ist der Energiesammler ein thermischer Solarkollektor, speichert der Wärmespeicher sensible (fühlbare) und/oder latente Wärme und ist der Wärmeträger ein Fluid (Wasser-Glykol-Gemisch), so daß die Kosten der Vorrichtung niedrig bleiben.

Weitere Vorteile und vorteilhafte Ausgestaltungen sind der nachfolgenden Beschreibung, der Zeichnung und den Ansprüchen entnehmbar.

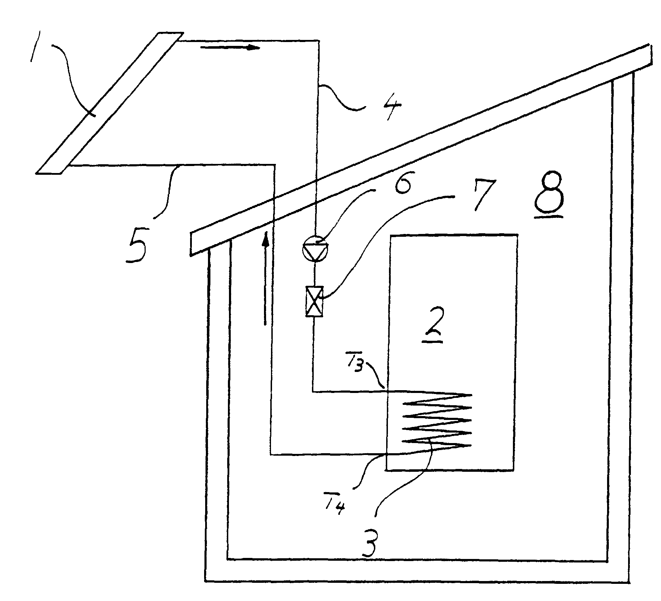

Ein Ausführungsbeispiel der Erfindung ist in der Zeichnung dargestellt und im folgenden näher beschrieben. Es zeigt
Fig. 1: eine Darstellung des geregelten Systems.

In Fig. 1 ist ein Solarkollektor 1 dargestellt, der über Verbindungsleitungen 4 ; 5 mit einem Wärmespeicher 2 verbunden ist. Der im Solarkollektor 1 erwärmte Wärmeträger wird von einer Pumpe 6 durch die Verbindungsleitung 4 in den im Wärmespeicher 2 befindlichen Wärmetauscher 3 gefördert. Dort gibt er seine Wärme ab und verläßt mit der Temperatur T₄ den Wärmetauscher 3 und den Speicher 2. In der Verbindungsleitung 5 strömt er zurück in den Solarkollektor, um, ausreichende Einstrahlung vorausgesetzt, wieder erwärmt zu werden. Das Rückschlagventil 7 dient dazu, bei abgeschalteter Pumpe unerwünschte Rückflüsse des Wärmeträgers aus dem Speicher 2 in den Solarkollektor 1 zu unterbinden. Der Wärmeverbraucher 8 ist in diesem Beispiel ein Gebäude, welches alternativ mit Wärme aus dem Wärmespeicher 2 oder einem hier nicht dargestellten anderen Wärmeerzeuger (Heizkessel) heizbar ist. Der Wärmevebraucher 8 kann aber auch eine Dusche, eine Waschmaschine, ein endothermer Produktionsprozess odgl. sein.

Selbstverständlich kann das erfindungsgemäße Verfahren zur Bewirtschaftung eines Wärmespeichers auch eingesetzt werden, wenn anstelle des Solarkollektor 1 Wärmetauscher, Wärmerohre oder Abwärmequellen als Energiesammler für den Wärmespeicher 2 dienen.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Solarkollektor
- 2: Wärmespeicher
- 3: Wärmetauscher
- 4: Verbindungsleitung zwischen Ausgang des Solarkollektors und Eingang des Wärmetauschers
- 5: Verbindungsleitung zwischen Ausgang des Wärmetauschers und Eingang des Solarkollektors.
- 6: Pumpe
- 7: Rückschlagventil
- 8: Wärmeverbraucher
- T₁: Mittlere Temperatur des Wärmeträgers im Solarkollektor
- T₂: Mittlere Temperatur des Wärmeträgers in der Verbindungsleitung zwischen Ausgang des Solarkollektors und Eingang des Wärmetauschers
- T₃: Temperatur des Wärmeträgers am Eingang des Wärmetauschers
- T₄: Temperatur des Wärmeträgers am Ausgang des Wärmetauschers

## Patentansprüche

1. Verfahren zur Bewirtschaftung des thermischen Speichers einer Solaranlage, gekennzeichnet durch folgende Verfahrensschritte:
1.1 ermitteln der inneren Energie des im Energiesammler (1) und in der Verbindungsleitung (4) zwischen Ausgang des Energiesammlers und Speichereingang befindlichen Wärmeträgers;
1.2 ermitteln der inneren Energie, die dem Wärmespeicher (2) entzogen wird, wenn ein dem Volumen des Wärmeträgers in Energiesammler (1) und Verbindungsleitung (4) entsprechendes Wärmeträgervolumen dem Wärmespeicher (2) mit der Austrittstemperatur (T₄) des Wärmeträgers aus dem Wärmespeicher (2) entnommen wird;
1.3 einschalten einer Einrichtung (6) zur Förderung des Wärmeträgers aus dem Energiesammler (1) in den Wärmespeicher (2) bei Zutreffen mindestens einer der folgenden Bedingungen:
1.3.1 Die gemäß Verfahrensschritt 1.1 ermittelte innere Energie ist um einen anlagenspezifischen Betrag ΔE, *der aus physikalischen Kenfigrößen der Solaranlage, wie beispielsweise Volumina und Temperaturen ermittelbar ist und vorgegeben werden kann,* größer als die gemäß Verfahrensschritt 1.2 ermittelte innere Energie;
1.3.2 die Temperatur (T₁) des Wärmeträgers im Energiesammler
- überschreitet eine anlagenspezifische Temperatur T_{5,}
- ist größer als die Umgebungstemperatur zuzüglich eines anlagenspezifischen Betrags ΔT₁ und
- ist größer als die Temperatur (T₄) des Wärmeträgers am Speicherausgangs zuzüglich eines anlagenspezifischen Betrags ΔT₂,
1.4 abschalten der Fördereinrichtung bei Zutreffen mindestens einer der folgenden Bedingungen:
1.4.1 Es wurde nach der Bedingung 1.3.1 eingeschaltet und mindestens der in Energiesammler (1) und Verbindungsleitung (4) befindliche Wärmeträger in den Wärmespeicher (2) gefördert und
- die Temperatur (T₃) des Wärmeträgers am Speichereingang ist kleiner als die Temperatur (T₄) des Wärmeträgers am Speicherausgang zuzüglich eines anlagenspezifischen Betrags ΔT₃.
1.4.2 Es wurde nach der Bedingung 1.3.2 eingeschaltet und die Temperatur (T₁) des Wärmeträgers im Energiesammler ist kleiner als die Temperatur (T₄) des Wärmeträgers am Speicherausgang zuzüglich eines anlagenspezifischen Betrags ΔT₄

2. Verfahren zur Bewirtschaftung des thermischen Speichers einer Solaranlage, gekennzeichnet durch folgende Verfahrensschritte:
2.1 Ermitteln der inneren Energie des im Energiesammler (1) und in der Verbindungsleitung (4) zwischen Ausgang des Energiesammlers und Speichereingang befindlichen Wärmeträgers;
2.2 ermitteln der inneren Energie, die dem Wärmespeicher (2) entzogen wird, wenn ein dem Volumen des Wärmeträgers in Energiesammler (1) und Verbindungsleitung (4) entsprechendes Wärmeträgervolumen dem Wärmespeicher (2) mit der Austrittstemperatur (T₄) des Wärmeträgers aus dem Wärmespeicher (2) entnommen wird;
2.3 Einschalten einer Einrichtung (6) zur Förderung des Wärmeträgers aus dem Energiesammler (1) in den Wärmespeicher (2), bei Zutreffen mindestens einer der folgenden Bedingungen:
2.3.1 Die gemäß Verfahrensschritt 2.1 ermittelte innere Energie ist um einen anlagenspezifischen Betrag *Δ*E*, der aus physikalischen Kenngrößen der Solaranlage, wie beispielsweise volumina und Temperaturen ermittelbar ist und vorgegeben werden kann,* größer als die gemäß Verfahrensschritt 2.2 ermittelte innere Energie;
2.3.2 die Temperatur (T₁) des Wärmeträgers im Energiesammler (1)
- überschreitet eine anlagenspezifische Temperatur T₆ und
- ist größer als die Temperatur (T₄) des Wärmeträgers am Speicherausgang zuzüglich eines anlagenspezifischen Betrags ΔT₅;
2.4 abschalten der Fördereinrichtung bei Zutreffen mindestens einer der folgenden Bedingungen:
2.4.1 Es wurde nach der Bedingung 2.3.1 eingeschaltet und es wurde mindestens der in Energiesammler (1) und Verbindungsleitung (4) befindliche Wärmeträger in den Wärmespeicher (2) gefördert und
- die Temperatur (T₃) des Wärmeträgers am Speichereingang ist kleiner als die Temperatur (T₄) des Wärmeträgers am Speicherausgang zuzüglich eines anlagenspezifischen Betrags ΔT₆.
2.4.2 Es wurde nach der Bedingung 2.3.2 eingeschaltet und die Temperatur (T₁) des Wärmeträgers im Energiesammler ist kleiner als die Temperatur (T₄) des Wärmeträgers am Speicherausgang zuzüglich eines anlagenspezifischen Betrags ΔT₇.

3. Verfahren nach Anspruch 1 oder 2, dadurch gekennzeichnet, daß, wenn die Einschaltbedingung nach Verfahrensschritt 1.3.1 oder 2.3.1 erfüllt ist, die Fördereinrichtung (6) erst eingeschaltet wird, wenn die zweite Ableitung nach der Zeit der Differenz der Inneren Energie des im Energiesammler (1) und in der Verbindungsleitung (4) befindlichen Wärmeträgers einerseits und der inneren Energie, die dem Wärmespeicher (2) gemäß Verfahrensschritt 1.2 oder 2.2 entnommen wird, andererseits < 0 ist.

4. Verfahren zur Bewirtschaftung des thermischen Speichers einer Solaranlage, gekennzeichnet durch folgende Verfahrensschritte:
4.1 ermitteln der inneren Energie des im Energiesammler (1) und in den außerhalb des thermischem Speichers und des von diesem versorgten Wärmeverbrauchers ( 8 ) verlaufenden Teilen der Verbindungsleitungen (4, 5) befindlichen Wärmeträgers :
4.2 ermitteln der inneren Energie, die dem Wärmespeicher (2) entzogen wird, wenn ein dem Volumen des Wärmeträgers in Energiesammler (1) und den außerhalb des thermischem Speichers und des von diesem versorgten Wärmeverbrauchers (8) verlaufenden Teilen der Verbindungsleitungen (4, 5) entsprechendes Wärmeträgervolumen dem Wärmespeicher (2) mit der Austrittstemperatur (T₄) des Wärmeträgers aus dem Wärmespeicher (2) entnommen wird.
4.3 Einschalten einer Einrichtung (6) zur Förderung des Wärmeträgers aus dem Energiesammler (1) in den Wärmespeicher (2), bei Zutreffen mindestens einer der folgenden Bedingungen :
4.3.1 die gemäß Verfahrensschritt 4.1 ermittelte innere Energie ist um einen anlagenspezifischen Betrag ΔE, *der aus physikalischen Kenngrößen der Solaranlage, wie beispielsweise Volumina und Temperaturen ermittelbar ist und vorgegeben werden kann,* größer als die gemäß Verfahrensschritt 4.2 ermittelte innere Energie;
4.3.2 die Temperatur (T₁) des Wärmeträgers im Energiesammler (1)
- ist größer als die Temperatur des vom Wärmespeicher versorgten Wärmeverbrauchers (8) zuzüglich eines anlagenspezifischen Betrags ΔT₈ und
- ist größer als die Temperatur (T₄) des Wärmeträgers am Speicherausgang zuzüglich eines anlagenspezifischen Betrags ΔT₉.
4.3.3 die Umgebungstemperatur ist kleiner als die Temperatur des Wärmeverbrauchers (8, Gebäudetemperatur),
- die mittlere Temperatur (T₁) des Wärmeträgers im Energiesammler und der außerhalb des thermischen Speichers und des von diesem versorgten Wärmeverbrauchers (8) verlaufenden Teile der Verbindungsleitung (4)
ist größer als die Temperatur des Wärmeverbrauchers (8) zuzüglich eines anlagenspezifischen Betrags AT14.und
- ist größer als die Temperatur (T₄) des Wärmeträgers am Speicherausgang zuzüglich eines anlagenspezifischen Betrags ΔT₁₀.
4.4 abschalten der Fördereinrichtung bei Zutreffen mindestens einer der folgenden Bedingungen:
4.4.1 Es wurde nach der Bedingung 4.3.1 eingeschaltet und es wurde mindestens der in Energiesammler (1) und den außerhalb des thermischem Speichers und des von diesem versorgten Wärmeverbrauchers (8) verlaufenden Teilen der Verbindungsleitungen (4, 5) befindliche Wärmeträger in den Wärmespeicher (2) gefördert und die Temperatur (T₃) des Wärmeträgers am Speichereingang ist kleiner als die Temperatur (T₄) des Wärmeträgers am Speicherausgang zuzüglich eines anlagenspezifischen Betrags ΔT₁₁.
4.4.2 Es wurde nach der Bedingung 4.3.2 eingeschaltet und die Temperatur (T₁) des Wärmeträgers im Energiesammler ist kleiner als die Temperatur (T₄) des Wärmeträgers am Speicherausgang zuzüglich eines anlagenspezifischen Betrags ΔT₁₂.
4.4.3 Es wurde nach der Bedingung 4.3.3 eingeschaltet und die Temperatur (T₁) des Wärmeträgers im Energiesammler ist kleiner als die Temperatur (T₄) des Wärmeverbrauchers (8, Gebäudetemperatur) zuzüglich eines anlagenspezifischen Betrags ΔT₁₃.

5. Vorrichtung zur Durchführung des Verfahrens nach einem der Ansprüche 1 bis 4, *mit einem Solarkollektor (1), einem* *Wärmespeicher (2), mit Verbindungsleitungen (4,5) zwischen Wärmespeicher und Solarkollektor, mit einer Fördereinrichtung (6), mit einem Rückschlagventil (7), mit einer Regeleinrichtung und mit Einrichtungen zur Energieerfassung* dadurch gekennzeichnet, daß die Fördereinrichtung (6) eine Pumpe ist.

6. Vorrichtung zur Durchführung des Verfahrens nach einem der Ansprüche 1 bis 5, dadurch gekennzeichnet, daß, die Fördereinrichtung (6) und das Rückschlagventil (7) durch ein geregeltes Durchströmventil ersetzt werden.

7. Vorrichtung zur Durchführung des Verfahrens nach einem der Ansprüche 1 bis 4, dadurch gekennzeichnet,
- daß der Energiesammler (1) ein thermischer Solarkollektor ist,
- daß der Wärmespeicher (2) sensible (fühlbare) und/oder latente Wärme speichert,
- daß der Wärmeträger ein Fluid (Wasser-Glykol-Gemisch) ist und,
- daß der Wärmeverbraucher ein Gebäude ist.

## Claims

1. Method for use of the thermal accumulator of a solar power installation, characterized by the following method steps:
1.1 determining the internal energy of the heat carrier in the energy collector (1) and in the connecting conduit (4) between the output of the energy collector and the accumulator input;
1.2 determining the internal energy which would be removed from the heat accumulator (2) if a heat carrier volume corresponding to the volume of the heat carrier in the energy collector (1) and in the connecting conduit (4) were removed from the heat accumulator (2) at output temperature (T₄) for the heat carrier exiting the heat accumulator (2) ;
1.3 switching-on a device (6) to transport the heat carrier out of the energy collector (1) and into the heat accumulator (2) should at least one of the following conditions obtain:
1.3.1 the internal energy determined in accordance with method step 1.1 is larger by an installation specific amount ΔE, which can be determined and specified by physical characteristics of the solar installation e.g. volumes and temperatures, than the internal energy determined in accordance with method step 1.2;
1.3.2 the temperature (T₁) of the heat carrier in the energy collector
- exceeds an installation specific temperature T₅,
- is larger than the ambient temperature plus an installation specific amount ΔT₁, and
- is larger than the temperature (T₄) of the heat carrier at the output of the accumulator plus an installation specific amount ΔT₂ ;
1.4 switching-off the transport device should at least one of the following conditions obtain:
1.4.1 switching-in is carried out in accordance with condition 1.3.1 and at least the heat carrier located in the energy collector (1) and in the connecting conduit (4) is transported into the heat accumulator (2) and
- the temperature (T₃) of the heat carrier at the entrance of the accumulator is smaller than the temperature (T₄) of the heat carrier at the output of the accumulator plus an installation specific amount ΔT₃.
1.4.2 switching-in is effected in accordance with condition 1.3.2 and the temperature (T₁) of the heat carrier in the energy collector is smaller than the temperature (T₄) of the heat carrier at the output of the accumulator plus an installation specific amount ΔT₄.

2. Method for use of a thermal collector of a solar power installation characterized by the following method steps:
2.1 determining the internal energy of the heat carrier in the energy collector (1) and in the connecting conduit (4) between the output of the energy collector and the accumulator input;
2.2 determining the internal energy which would be removed from the heat accumulator (2) if a heat carrier volume corresponding to the volume of the heat carrier in the energy collector (1) and in the connecting conduit (4) were removed from the heat accumulator (2) having the output temperature (T₄) for the heat carrier exiting the heat accumulator (2) ;
2.3 switching-on a device (6) for transporting the heat carrier out of the energy collector (1) and into the heat accumulator (2) should at least one of the following conditions obtain:
2.3.1 the amount of internal energy determined in accordance with method step 2.1 is larger by an installation specific amount ΔE, which can be determined and specified by physical characteristics of the solar installation e.g. volumes and temperatures, than the internal energy determined in accordance with method step 2.2;
2.3.2 the temperature (T₁) of the heat carrier in the energy collector (1)
- exceeds an installation specific temperature (T₆) and
- is larger than the temperature (T₄) of the heat carrier at the accumulator output plus an installation specific amount ΔT₅;
2.4 switching-off the transport device should at least one of the following conditions obtain:
2.4.1 switch-in was effected in accordance with condition 2.3.1 and at least the energy carrier located in the energy collector (1) and the connecting conduit (4) is transported into the heat accumulator (2) and
- the temperature (T₃) at the heat carrier at the input of the accumulator is smaller than the temperature (T₄) of the heat carrier at the output of the accumulator plus an installation specific amount ΔT₆;
2.4.2 switching-in was effected in accordance with condition 2.3.2 and the temperature (T₁) of the heat carrier in the energy collector is smaller than the temperature (T₄) of the heat carrier at the output of the accumulator plus an installation specific amount ΔT₇.

3. Method according to claim 1 or 2, characterized in that the switching condition is satisfied in accordance with method steps 1.3.1 or 2.3.1 and the transport device (6) is first switched-in when the second derivative with respect to time of the difference between the internal energy of the heat carrier located in the energy collector (1) and in the connection conduit (4) and the internal energy which is removed from the heat accumulator (2) in accordance with method step 1.2 or 2.2 < 0.

4. Method for use of the thermal collector of a solar power installation, characterized by the following method steps:
4.1 determining the internal energy of the heat carrier in the energy collector (1) and in the portions of the connecting conduits (4, 5) external to the thermal accumulator and to the heat user (8) supplied therefrom;
4.2 determining the internal energy which would be removed from the heat accumulator (2) if a heat carrier volume corresponding to the volume of the heat carrier in the energy collector (1) and in the portions of the connecting conduits (4, 5) outside of the thermal accumulator and of the heat user (8) supplied thereby were removed from the heat accumulator (2) having an output temperature (T₄) for the heat carrier exiting the accumulator (2) ;
4.3 switching on a device (6) to transport the heat carrier out of the energy collector (1) and into the heat accumulator (2) if at least one of the following conditions obtains;
4.3.1 the internal energy determined in accordance with method step 4.1 is larger by an installation specific amount ΔE, which can be determined and specified by physical characteristics of the solar installation e.g. volumes and temperatures, than the internal energy determined in accordance with method step 4.2;
4.3.2 the temperature (T₁) of the heat carrier in the energy collector (1)
- is larger than the temperature of the heat user (8) supplied by the heat accumulator plus an installation specific amount ΔT₈ and
- is larger than the temperature (T₄) of the heat carrier at the accumulator output plus an installation specific amount ΔT₉.
4.3.3 the ambient temperature is less than the temperature of the heat user (8, building temperature),
- the average temperature (T₁) of the heat carrier in the energy collector and in the portions of the connecting conduits (4) outside of the thermal accumulator and of the heat user (8) supplied thereby
- is larger than the temperature of the heat user (8) plus an installation specific amount ΔT₁₄, and
- is larger than the temperature (T₄) of the heat carrier at the output of the accumulator plus an installation specific amount ΔT₁₀;
4.4 switching-off the transport device should at least one of the following conditions obtain:
4.4.1 switching-in is effected in accordance with condition 4.3.1 and at least the heat carrier located in the energy collector (1) and in the portions of the connecting conduits (4, 5) outside of the thermal accumulator and of the heat user (8) supplied thereby is transported into the heat accumulator (2) and the temperature (T3) of the heat carrier at the input of the accumulator is less than the temperature (T₄) of the heat carrier at the output of the accumulator plus an installation specific amount ΔT₁₁.
4.4.2 Switch-in is effected in accordance with condition 4.3.2 and the temperature (T₁) of the heat carrier in the energy collector is smaller than the temperature (T₄) of the heat carrier at the output of the accumulator plus an installation specific amount ΔT₁₂.
4.4.3 Switch-in is effected in accordance with condition 4.3.3 and the temperature (T₁) of the heat carrier in the energy collector is less than the temperature (T₄) of the heat user (8, building temperature) plus an installation specific amount ΔT₁₃.

5. Device for carrying out the method according to the claims 1 to 4, comprising a collector (1), a heat accumulator (2), connecting conduits (4, 5) between the heat accumulator (2) and the solar collector (1), a transport device (6), a check valve (7), an electrical regulation device and at least one temperature sensor, characterized in that the transport device (6) is a pump.

6. Device for carrying out the method according to the claims 1 to 4, characterized in that the transport device (6) and the check valve (7), are replaced by a flow valve regulated by the regulation device.

7. Device for carrying out the method according to the claims 1 to 4, characterized in that,
- the energy collector (1) is a thermal solar collector,
- the heat accumulator (2) stores sensible and/or latent heat,
- the heat carrier is a fluid (water-glycol-mixture) and
- the heat consumer is a building.

## Revendications

1. Procédé d'exploitation de l'accumulateur thermique d'une installation solaire, caractérisé par les étapes de procédé suivantes:
1.1 Détermination de l'énergie interne du fluide caloporteur se trouvant dans le collecteur d'énergie (1) et dans la conduite de raccordement (4) entre la sortie du collecteur d'énergie et l'entrée de l'accumulateur;
1.2 Détermination de l'énergie interne, qui est prélevée de l'accumulateur thermique (2), quand un volume de fluide caloporteur correspondant au volume du fluide caloporteur dans le collecteur d'énergie (1) et dans la conduite de raccordement (4) est enlevé de l'accumulateur thermique (2) à la température de sortie (T4) du fluide caloporteur venant de l'accumulateur thermique (2);
1.3 Mise en route d'un dispositif (6) pour amener le fluide caloporteur du collecteur d'énergie (1) vers l'accumulateur thermique (2) au cas où au moins une des conditions suivantes est satisfaite:
1.3.1 L'énergie interne déterminée selon l'étape 1.1 du procédé est plus grande que l'énergie interne déterminée selon l'étape 1.2 du procédé, pour une valeur ΔE spécifique à l'installation, qui est déterminable et peut être prédéfinie à partir des caractéristiques physiques de l'installation solaire telles que, par exemple, les volumes et les températures;
1.3.2 La température (T1) du fluide caloporteur dans le collecteur d'énergie
- dépasse une température T5 spécifique à l'installation,
- est supérieure à la température ambiante plus une valeur ΔT1 spécifique à l'installation et
- est supérieure à la température (T4) du fluide caloporteur à la sortie de l'accumulateur plus une valeur ΔT2 spécifique à l'installation;
1.4 Mise à l'arrêt du dispositif d'alimentation au cas où au moins une des conditions suivantes est satisfaite:
1.4.1 La mise en route a lieu sur base de la condition 1.3.1 et le fluide caloporteur se trouvant au moins dans le collecteur d'énergie (1) et dans la conduite de raccordement (4) est amené dans l'accumulateur thermique (2) et
- la température (T3) du fluide caloporteur à l'entrée de l'accumulateur est inférieure à la température (T4) du fluide caloporteur à la sortie de l'accumulateur plus une valeur ΔT3 spécifique à l'installation.
1.4.2 La mise en route a lieu sur base de la condition 1.3.2 et la température (T1) du fluide caloporteur dans le collecteur d'énergie est inférieure à la température (T4) du fluide caloporteur à la sortie de l'accumulateur plus une valeur ΔT4 spécifique à l'installation.

2. Procédé d'exploitation de l'accumulateur thermique d'une installation solaire, caractérisé par les étapes de procédé suivantes:
2.1 Détermination de l'énergie interne du fluide caloporteur se trouvant dans le collecteur d'énergie (1) et dans la conduite de raccordement (4) entre la sortie du collecteur d'énergie et l'entrée de l'accumulateur;
2.2 Détermination de l'énergie interne, qui est prélevée de l'accumulateur thermique (2), quand un volume de fluide caloporteur correspondant au volume du fluide caloporteur dans le collecteur d'énergie (1) et dans la conduite de raccordement (4) est enlevé de l'accumulateur thermique (2) à la température de sortie (T4) du fluide caloporteur venant de l'accumulateur thermique (2);
2.3 Mise en route d'un dispositif (6) pour amener le fluide caloporteur du collecteur d'énergie (1) vers l'accumulateur thermique (2) au cas où au moins une des conditions suivantes est satisfaite:
2.3.1 L'énergie interne déterminée selon l'étape 2.1 du procédé est plus grande que l'énergie interne déterminée selon l'étape 2.2 du procédé, pour une valeur ΔE spécifique à l'installation, qui est déterminable et peut être prédéfinie à partir des caractéristiques physiques de l'installation solaire telles que, par exemple, les volumes et les températures;
2.3.2 La température (T1) du fluide caloporteur dans le collecteur d'énergie (1)
- dépasse une température T6 spécifique à l'installation et
- est supérieure à la température (T4) du fluide caloporteur à la sortie de l'accumulateur plus une valeur ΔT5 spécifique à l'installation;
2.4 Mise à l'arrêt du dispositif d'alimentation au cas où au moins une des conditions suivantes est satisfaite:
2.4.1 La mise en route a lieu sur base de la condition 2.3.1 et le fluide caloporteur se trouvant au moins dans le collecteur d'énergie (1) et dans la conduite de raccordement (4) est amené dans l'accumulateur thermique et
- la température (T3) du fluide caloporteur à l'entrée de l'accumulateur est inférieure à la température (T4) du fluide caloporteur à la sortie de l'accumulateur plus une valeur ΔT6 spécifique à l'installation.
2.4.2 La mise en route a lieu sur base de la condition 2.3.2 et la température (T1) du fluide caloporteur dans le collecteur d'énergie est inférieure à la température (T4) du fluide caloporteur à la sortie de l'accumulateur plus une valeur ΔT7 spécifique à l'installation.

3. Procédé selon la revendication 1 ou 2, se caractérisant par le fait que, quand la condition de mise en route selon l'étape 1.3.1 ou 2.3.1 du procédé est remplie, le dispositif d'alimentation (6) est d'abord mis en route quand la dérivée seconde par rapport au temps de la différence entre d'une part l'énergie interne du fluide caloporteur se trouvant dans le collecteur d'énergie (1) et dans la conduite de raccordement (4) et, d'autre part, de l'énergie interne qui est prélevée de l'accumulateur thermique (2) selon l'étape 1.2 ou 2.2 du procédé est négative.

4. Procédé d'exploitation de l'accumulateur thermique d'une installation solaire, caractérisé par les étapes de procédé suivantes:
4.1 Détermination de l'énergie interne du fluide caloporteur se trouvant dans le collecteur d'énergie (1) et dans les éléments des conduites de raccordement (4, 5) à l'extérieur de l'accumulateur thermique et du consommateur de chaleur (8) qu'il alimente;
4.2 Détermination de l'énergie interne, qui est prélevée de l'accumulateur thermique (2), quand un volume de fluide caloporteur correspondant au volume du fluide caloporteur dans le collecteur d'énergie (1) et dans les éléments des conduites de raccordement (4,5) à l'extérieur de l'accumulateur thermique et du consommateur de chaleur (8) qu'il alimente est enlevé de l'accumulateur thermique (2) à la température de sortie (T4) du fluide caloporteur venant de l'accumulateur thermique (2).
4.3 Mise en route d'un dispositif (6) pour amener le fluide caloporteur du collecteur d'énergie (1) vers l'accumulateur thermique (2) au cas où au moins une des conditions suivantes est satisfaite:
4.3.1 L'énergie interne déterminée selon l'étape 4.1 du procédé est plus grande que l'énergie interne déterminée selon l'étape 4.2 du procédé, pour une valeur ΔE spécifique à l'installation, qui est déterminable et peut être prédéfinie à partir des caractéristiques physiques de l'installation solaire telles que, par exemple, les volumes et les températures;
4.3.2 La température (T1) du fluide caloporteur dans le collecteur d'énergie (1)
- est supérieure à la température du consommateur de chaleur (8) alimenté par l'accumulateur thermique, plus une valeur ΔT8 spécifique à l'installation et
- est supérieure à la température (T4) du fluide caloporteur à la sortie de l'accumulateur plus une valeur ΔT9 spécifique à l'installation;
4.3.3 La température ambiante est inférieure à la température du consommateur de chaleur (8, température du bâtiment),
- la température moyenne (T1) du fluide caloporteur dans le collecteur d'énergie et dans les éléments de la conduite de raccordement (4) se trouvant à l'extérieur de l'accumulateur thermique et du consommateur de chaleur (8) qu'il alimente, est plus grande que la température du consommateur de chaleur (8) plus une valeur ΔT14 spécifique à l'installation et
- est supérieure à la température (T4) du fluide caloporteur à la sortie de l'accumulateur plus une valeur ΔT10 spécifique à l'installation;
4.4 Mise à l'arrêt du dispositif d'alimentation au cas où au moins une des conditions suivantes est satisfaite:
4.4.1 La mise en route a lieu sur base de la condition 4.3.1 et il sera amené dans l'accumulateur thermique (2) le fluide caloporteur se trouvant dans le collecteur d'énergie (1) et dans les éléments des conduites de raccordement (4, 5) à l'extérieur de l'accumulateur thermique et du consommateur de chaleur (8) et la température (T3) du fluide caloporteur à l'entrée de l'accumulateur est inférieure à la température (T4) du fluide caloporteur à la sortie de l'accumulateur plus une valeur ΔT11 spécifique à l'installation.
4.4.2 La mise en route a lieu sur base de la condition 4.3.2 et la température (T1) du fluide caloporteur dans le collecteur d'énergie est inférieure à la température (T4) du fluide caloporteur à la sortie de l'accumulateur plus une valeur ΔT12 spécifique à l'installation.
4.4.3 La mise en route a lieu sur base de la condition 4.3.3 et la température (T1) du fluide caloporteur dans le collecteur d'énergie est inférieure à la température (T4) du consommateur de chaleur (8, température du bâtiment) plus une valeur ΔT13 spécifique à l'installation.

5. Equipement pour l'exécution du procédé selon une des revendications 1 à 4, avec un capteur solaire (1), un accumulateur thermique (2), avec conduites de raccordement (4, 5) entre accumulateur thermique et capteur solaire, avec un dispositif de régulation et avec des dispositifs pour la récupération d'énergie, se caractérisant par le fait que le dispositif d'alimentation (6) est une pompe.

6. Equipement pour l'exécution des procédés selon une des revendications 1 à 5, se caractérisant par le fait que le dispositif d'alimentation (6) et le clapet anti-retour (7) sont remplacés par une valve de débit régulée.

7. Equipement pour l'exécution des procédés selon une des revendications 1 à 4, se caractérisant par le fait que:
- le collecteur d'énergie (1) est un capteur solaire thermique,
- l'accumulateur thermique (2) accumule la chaleur sensible et/ou latente,
- le fluide caloporteur est constitué d'un mélange fluide d'eau et de glycol et,
- le consommateur de chaleur est un bâtiment.
